# EUROPÄISCHE PATENTSCHRIFT

(11) **EP 2 735 222 B1**
(45) Veröffentlichungstag und Bekanntmachung des Hinweises auf die Patenterteilung: **09.09.2015**
(21) Anmeldenummer: 13194056.1
(22) Anmeldetag: 22.11.2013
(51) Int. Cl.: A01F 29/09

(54) **Feldhäcksler mit einem Schneidwerk**
Chaff cutter with a cutting device
Ramasseuse-hâcheuse dotée d'un outil de coupe

(30) Priorität: 26.11.2012 DE 102012022986
(43) Veröffentlichungstag der Anmeldung: 28.05.2014
(73) Patentinhaber: CLAAS Saulgau GmbH, 88348 Bad Saulgau (DE)
(72) Erfinder: Birkhofer, Stefan, 78333 Stockach (DE); Kajtar, Peter, 88348 Bad Saulgau (DE)

(56) Entgegenhaltungen:
- EP-A1- 1 852 011
- EP-A1- 2 132 974
- DD-A1- 224 476
- DE-A1- 2 445 702
- DE-A1- 19 841 598

## Beschreibung

Die Erfindung betrifft einen Feldhäcksler mit wenigstens einem eine um eine Rotationsachse rotierende Messertrommel aufweisenden Schneidwerk zum Schneiden und Zerkleinern von Erntegut nach dem Oberbegriff des Anspruchs 1.

Bei selbstfahrenden Feldhäckslern zum Ernten von Mais, Grünfutter, Silage, Heu oder dergleichen wird mit Hilfe eines rotierenden Schneidwerks das Erntegut vom Feld aufgenommen, zerkleinert und über einen Auswurfkanal auf ein Transportfahrzeug gefördert. Derartige Feldhäcksler weisen heutzutage unterschiedlichste Anbau- bzw. Arbeitsgeräte auf, die frontseitig angekoppelt werden. Beispielsweise weisen diese Arbeitsgeräte mehrere Schneidwerkzeuge auf, um stehenden Mais abzuschneiden und dem Schneidwerk zuzuführen. Auch sind bereits sogenannte Pick-up-Vorsätze bekannt, die beim Ernten von Silage, Heu oder dergleichen verwendet werden, um beispielsweise einen auf dem Feld liegenden Großschwad aufzunehmen, ggf. zu zerkleinern und einem entsprechenden Transportfahrzeug zuzuführen.

Die Schneidwerke bzw. Häckselaggregate derartiger Feldhäcksler unterliegen großen Beanspruchungen, sodass von Zeit zu Zeit die Schneidelemente und/oder eine feststehende Gegenschneide aufgrund entsprechender Abnutzungen nachgeschliffen bzw. nachjustiert werden müssen. Die Gegenschneide ist bei manchen Feldhäckslern derart mit einem Bodenblech bzw. einem Gehäuseelement der Schneidtrommel verbunden, sodass beim Nachjustieren der Gegenschneide zugleich auch eine Verstellung des Bodenbleches bzw. des Trommelelementes erfolgt.

So ist aus der DE 196 52 656 C4 bereits ein derartiges Schneidwerk bekannt, wobei die Gegenschneide drehbar abgestützt ist, sodass beim Nachschleifen bzw. bei einer Abnutzung der Gegenschneide diese durch eine leichte Änderung der Winkelstellung wieder korrekt mit den rotierenden Schneidelementen des Schneidwerkes zusammenwirken kann. Durch die Nachstellung der Gegenschneide wird das drehbar gelagerte Trommelelement bzw. Bodenblech ebenfalls nachjustiert, sodass zumindest im Ruhezustand der Spalt bzw. Abstand zwischen rotierenden Schneiden und Bodenblech bzw. Trommelelement möglichst konstant bleibt.

Zur Verstellung der Gegenschneide ist ein Linearmotor vorgesehen, der über eine Hebelmechanik die Winkelstellung bzw. Justage der Gegenschneide bewirkt. So wird gemäß der DE 196 52 656 B4 durch die Verstellung mittels eines Hebelsystems bzw. Gelenksystems das Spaltmaß bzw. der Abstand zwischen Bodenblech und rotierenden Schneidmessern nachgestellt. Hierbei wird nämlich die der Gegenschneide gegenüberliegende Seite des Bodenbleches radial verstellt. Entsprechend wird bei einem Nachstellen der Gegenschneide das Bodenblech einerseits durch die drehbare Anbindung an der Gegenschneide und anderseits durch die Nachstellung mittels des Hebelsystems beidendig bzw. beidseitig verstellt.

Aus DE 24 45 702 A1 ist ein Feldhäcksler mit einer Häckseltrommel bekannt, die in einem Gehäuse um eine horizontale Achse drehbar angeordnet ist, und mit einem zur Häckseltrommel vertikal einstellbarem Bodenblech, welches schwenkbar angeordnet ist.

DE 198 41 598 A1 offenbart eine Fördervorrichtung für/an landwirtschaftlichen Erntefahrzeugen, insbesondere an landwirtschaftlichen Ballenpressen, bestehend aus einer Pick-up-Trommel zum Aufnehmen des Halmgutes, einem sich daran anschließenden Förderkanal, der in den Pressraum der Ballenpresse mündet, wobei der Förderkanal nach oben durch eine feststehende, von Förderzinken eines antreibbaren Förderrotors durchsetzte Abstreifeinrichtung und nach unten durch einen relativ zum Förderrotor bei Überlastungen automatisch absenkbaren, von einer Vielzahl von Schneidmessern durchsetzten Förderkanalboden begrenzt ist, welcher nach Entlastung selbsttätig in seine Normalstellung zurückweicht, wobei Mittel vorgesehen sind, um in Abhängigkeit von der voreinstellbaren Belastung des Förderrotors den Förderkanalboden in seinem Anfangsbereich benachbart zur Pick-up-Trommel und unterhalb des Eintauchbeginns der Förderzinken abzusenken und/oder die Schneidmesser nach unten aus dem Förderkanalboden hinauszuschwenken.

Aufgabe der Erfindung ist demgegenüber, die Schaffung eines Feldhäckslers mit optimierter Förderleistung bzw. Materialabgabe.

Diese Aufgabe wird, ausgehend von einem Feldhäcksler der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Feldhäcksler im Wesentlichen dadurch aus, dass der Abstand auf dem der Gegenschneide abgewandten Ende auf beliebige Werte einstellbar ist, vorzugsweise zwischen null und 40 Millimeter. Vorne bleibt das Trommelgehäuseelement in vorteilhafter Weise dicht an der Messertrommel.

Vorteilhafterweise weist die Verstellvorrichtung wenigstens eine elektronische Soll-Ist-Vergleichseinheit zum Durchführen eines Vergleichs von wenigstens einem elektronischen Istwert, z.B. eines vorteilhaften Betriebsparameters wie des Abstands und/oder der Position des Trommelgehäuseelementes, mit einem elektronischen Sollwert, vorzugsweise des Abstandes und/oder der Position des Trommelgehäuseelementes, auf.

Mit Hilfe einer derartigen, vorteilhaften elektronischen Soll-Ist-Vergleichseinheit gemäß der Erfindung kann im Betrieb bzw. während der Erntephase eine vorteilhafte Anpassung an die jeweiligen, momentanen/aktuellen bzw. sich verändernden Betriebsbedingungen verwirklicht werden. Das bedeutet, dass während dem Betrieb bzw. der Erntephase der Abstand bzw. die Position des Trommelgehäuseelementes in vorteilhafter Weise durch die Verstellvorrichtung aktiv geregelt werden kann. Dementsprechend können bei sich ändernden Betriebsbedingungen bzw. sich änderndem Erntegutstrom eine Anpassung bzw. Änderung/Verstellung des Abstandes bzw. der Position des Trommelgehäuseelementes durchgeführt werden. So resultieren aus den sich ändernden Betriebsbedingungen in vorteilhafter Weise auch sich hieraus sich ändernde Istwerte, die mit Hilfe des erfindungsgemäßen Soll-Ist-Vergleichs mit einem elektronischen Sollwert verglichen und in vorteilhafter Weise der Abstand bzw. die Position des Trommelgehäuseelementes angepasst bzw. verändert wird. Dementsprechend ist gemäß der Erfindung eine aktive Regelung der Position/Stellung des Trommelgehäuseelementes realisierbar.

Vorteilhafterweise ist ein Betriebsparameter als Istwert ausgebildet, der vorzugsweise einem Sollwert des Abstands bzw. Position des Trommelgehäuseelementes zuordenbar ist. Ein erfindungsgemäßer Vergleich des Istwertes mit dem Sollwert bzw. einem bisherigen/früheren Wert des Betriebsparameters kann dann in vorteilhafter Weise zur Einstellung bzw. Änderung des Abstandes bzw. der Position des Trommelgehäuseelementes verwendet werden.

Beispielsweise werden die Istwerte in vorteilhafter Weise mit Hilfe wenigstens eines Sensors erfasst und/oder mit Hilfe wenigstens einer manuellen Einstellung bzw. einem Schalter, Taster, Touchscreen oder dergleichen vorgegeben.

Gemäß der Erfindung kann z.B. der Ist-Abstand bzw. die Position des Trommelgehäuseelementes erfasst und mit einem Sollwert verglichen werden. Diese Variante ist von Vorteil, wenn z.B. ein besonders großer Erntegutstrom bzw. dessen Menge/Durchsatz und die hierdurch generierten Druckkräfte, die gegen das Trommelgehäuseelementes drücken, und/oder ein Nachschleifen der Schneidmesser/Gegenschneide zu einer Verstellung des Trommelgehäuseelementes bzw. zu einer Vergrößerung des Abstandes führt.

Vorzugsweise ist wenigstens eine elektronische Sollwert-Speichereinheit zum Speichern von von Istwerten abhängigen Sollwerten vorgesehen. Bevorzugt ist eine elektronische Speichereinheit zum Speichern von elektronischen Sollwerten, vorzugsweise des Abstandes bzw. der Position/Stellung des Trommelgehäuseelementes, in Abhängigkeit unterschiedlichster Betriebsparameter bzw. möglicher/denkbarer Istwerte vorgesehen. Beispielsweise ist in der elektronischen Speichereinheit die Art und Weise bzw. die Abhängigkeit und/oder der funktionelle Zusammenhang des elektronischen Sollwertes, insbesondere des Abstands bzw. der Position des Trommelgehäuseelementes, mit Bezug auf einen oder mehrere bzw. unterschiedliche, z.B. erfasste oder eingestellte Betriebsparameter, insbesondere des Erntegutstroms, abgespeichert bzw. verknüpft.

In vorteilhafter Weise kann eine elektronische Recheneinheit vorgesehen werden, die die Art und Weise bzw. die Abhängigkeit und/oder den funktionellen Zusammenhang des elektronischen Sollwertes, insbesondere des Abstands bzw. der Position des Trommelgehäuseelementes, in Bezug auf einen oder mehrere bzw. unterschiedliche, z.B. erfasste oder eingestellte Betriebsparameter berechnet, insbesondere des Erntegutstroms. Hierdurch kann beispielsweise eine selbstlernende Funktionalität des erfindungsgemäßen Schneidwerks realisiert werden. Das bedeutet, dass das Schneidwerk mit Hilfe entsprechender elektronischer Komponenten eine Optimierung selbsttätig bzw. selbstlernend durchführen kann.

Vorteilhafterweise sind elektronische Sollwerte des Abstandes und/oder der Position des Trommelgehäuseelementes abgespeichert und den elektronischen Istwerten des Abstandes und/oder der Position des Trommelgehäuseelementes und/oder (möglicher bzw. zu erwartender) Istwerte wenigstens eines oder mehrerer, unterschiedlicher Betriebsparameter, insbesondere des Erntegutstromes, zugeordnet.

Dementsprechend kann gemäß der Erfindung der Sollwert des Abstandes bzw. der Position des Trommelgehäuseelementes nahezu optimal an einen sich ändernden Betriebsparameter bzw. Istwert angepasst werden. Hierdurch wird eine Optimierung des Betriebes des Schneidwerkes realisierbar. Dementsprechend kann während des Betriebs eine Optimierung des Abwurfverhaltens des Schneidwerkes sowie eine Optimierung des Energieeinsatzes und somit eine Energieeinsparung im Vergleich zum Stand der Technik verwirklicht werden. Darüber hinaus kann gemäß der Erfindung eine Reduzierung der Abnutzung bzw. von Verschleiß an Komponenten des Schneidwerks wie zum Beispiel des Trommelbodens bzw. des Trommelgehäuseelementes oder auch anderer Komponenten des Trommelgehäuses verwirklicht werden. Darüber hinaus kann eine Steigerung des Durchsatzes durch das Schneidwerk, das heißt eine Leistungssteigerung des erfindungsgemäßen Schneidwerks, erzielt werden.

In einer bevorzugten Ausführungsform der Erfindung weist die Verstellvorrichtung wenigstens eine elektronische Abstands-Aktor-Einheit zum Umsetzen und Einstellen des Sollwertes des Abstandes bzw. der Position/Stellung des Trommelgehäuseelementes auf. Dementsprechend wird durch die elektronische Abstands-Aktor-Einheit der aktuelle Istwert an den Sollwert des Abstands bzw. der Bodenposition angepasst. Aufgrund sich ändernder Betriebsbedingungen kann eine Verstellung des Istwerts beispielsweise aufgrund des Erntegutstromes und/oder sich ändernder Erntebedingungen, durch die vorteilhafte elektronische Abstands-Aktor-Einheit wieder ausgeglichen werden. Das bedeutet, dass beispielsweise eine elektronische Istwert-Änderung der erfindungsgemäßen elektronischen Soll-Ist-Vergleichseinheit übermittelt wird und diese dann den aktuellen Istwert mit dem Sollwert vergleicht und bei einem Unterschied zwischen den beiden Werten bzw. elektronischen Signalen/Daten mit Hilfe der elektronischen Abstands-Aktor-Einheit bewirkt, dass der Sollwert realisiert bzw. umgesetzt wird bzw. dem Istwert wieder entspricht.

In einer besonderen Ausführungsform der Erfindung weist die Abstands-Aktor-Einheit wenigstens eine Hydraulik-Zylinder-Kolben-Einheit auf. Die elektronische, aktive Regelung mit Hilfe der elektronischen Abstands-Aktor-Einheit wird vom Stellglied bzw. vom Aktor, der in vorteilhafter Weise als Hydraulik-Zylinder-Kolben-Einheit ausgebildet ist, entsprechend eingeregelt bzw. das/der den Abstand bzw. die Stellung/Position des Trommelgehäuseelementes verändert bzw. verstellt.

Möglicherweise ist die Hydraulik-Zylinder-Kolben-Einheit als einfach wirkender Hydraulikzylinder ausgeführt und vorzugsweise mit Hilfe einer vorteilhaften Rückholfeder, deren Federkraft der Druckkraft des einfach wirkenden Hydraulikzylinders entgegengerichtet ist, kombiniert. Hierdurch wird eine definierte Stellung des Trommelgehäuseelementes bzw. ein definierter Abstand in vorteilhafter Weise festgelegt bzw. einstellbar/umsetzbar.

Vorzugsweise ist das Stellglied bzw. die Hydraulik-Zylinder-Kolben-Einheit als doppeltwirkender Hydraulikzylinder ausgebildet. Es hat sich in ersten Versuchen gezeigt, dass ein doppeltwirkender Hydraulikzylinder als Stellglied der erfindungsgemäßen aktiven Regelung des Abstandes bzw. der Position des Trommelgehäuseelementes von besonderem Vorteil ist. Mit Hilfe eines doppeltwirkenden Hydraulikzylinders, der dementsprechend einen Kolben aufweist, der beidseitig mit Hydraulikflüssigkeit bzw. mit Druck beaufschlagbar ist, kann bei den in Feldhäckslern üblichen Hydraulikdrücken, eine exakte bzw. eine positionsgenaue Stellung des Kolbens und somit Positionierung des Trommelgehäuseelementes bzw. Einstellung des Abstandes realisiert werden. Die bei den in Feldhäckslern üblichen sehr großen Hydraulikdrücken generieren in einem doppeltwirkenden Hydraulikzylinder derart große Kräfte, die vergleichsweise resistent gegenüber äußeren Verstellkräften sind, die sich beispielsweise aufgrund sich ändernder Erntegutströme oder dergleichen ergeben. Dementsprechend wirkungsvoll und unnachgiebig kann der Abstand bzw. die Position des Trommelgehäuseelementes fest eingestellt werden. Grundsätzlich ist denkbar, dass durchaus auch andere Stellglieder eingesetzt werden können. Beispielsweise können Elektromotoren mit Hilfe einer Spindel bzw. einem Schraubelement, vorzugsweise mit Selbsthemmung, und/oder Linearmotoren, vorzugsweise mit Feststellbremse bzw. Reibklemmung oder dergleichen, etc. als vorteilhafte Aktoren eingesetzt werden, die die elektronischen Signale bzw. Informationen der elektronischen Soll-Ist-Vergleichseinheit bzw. Abstands-Aktor-Einheit in entsprechende mechanische Stellbewegungen umsetzen bzw. zur Einstellung des erfindungsgemäßen Abstandes bzw. der Positionierung des Trommelgehäuseelementes verwendet werden können.

Generell können erfindungsgemäße Istwerte durch unterschiedliche Messglieder bzw. Betriebsparameter generiert werden. Vorzugsweise ist wenigstens eine Stelleinheit zum Einstellen eines Istwertes eines Betriebsparameters vorgesehen. So kann zum Beispiel mit Hilfe eines Schalters oder dergleichen ein Betriebsparameter vom Fahrer eingestellt werden. Beispielsweise kann die Auswahl der Erntegutsorte, wie zum Beispiel Gras, Mais, Heu, Silage oder dergleichen, durch eine vorteilhafte Einstellung einer Stelleinheit bzw. eines Schalters/Tasters realisiert werden. Beispielsweise kann der Fahrer vor Beginn der Erntephase bzw. beim Heranfahren an das Feld durch Drücken eines Tasters bzw. Schalters die Erntegutsorte auswählen, sodass eine entsprechende Erntesorte als (elektronischer) Istwert eingestellt wird. So ist in vorteilhafter Weise die Stelleinheit als Sorteneinstelleinheit zum Einstellen der Sorte des Erntegutes als Istwert ausgebildet.

Gemäß der Erfindung kann aufgrund dieses Sorten-Istwertes ein vorteilhafter Sollwert des Abstandes bzw. der Stellung des Trommelgehäuseelementes, gegebenenfalls abgespeichert in der elektronischen Sollwert-Speichereinheit, zugeordnet werden und mit Hilfe der vorteilhaften elektronischen Abstands-Aktor-Einheit bzw. einem vorteilhaften Stellglied, insbesondere dem Hydraulikzylinder, als Ruhe-/Ausgangswert eingestellt bzw. festgelegt werden. Das gleiche kann vorteilhaft auch bei der Voreinstellung eines vorbestimmten Abstands in Abhängigkeit einer Anzahl Messer, welche an der Häckseltrommel angeordnet sind, angewendet werden.

Grundsätzlich ist jedoch auch denkbar, dass einerseits der Fahrer beispielsweise von der Kabine aus bzw. in der Kabine/am Arbeitsplatz einen Taster bzw. Schalter und/oder einen Touch-Screen bzw. einen Sensorbildschirm betätigt und andererseits kann gemäß der Erfindung mit Hilfe eines vorteilhaften Sortensensors beispielsweise automatisch die Sorte erkannt und entsprechend ein Betriebsparameter bzw. ein Istwert eingestellt bzw. verändert werden. Beispielsweise kann auch mit Hilfe einer Kamera, Photosensor oder dergleichen die Sorte erkannt und der entsprechende Istwert definiert werden, der vorzugsweise einem Sollwert des Abstands zuzuordnen ist und mit dem Istwert des Abstands kann letzterer verglichen werden bzw. der der Sorte zugeordnete Sollwert des Abstandes wird eingestellt.

Auch kann der Reifegrad des Erntegutes, die Feuchte bzw. der Wassergehalt des Erntegutes in vorteilhafter Weise mit Hilfe eines vorteilhaften Sensors, insbesondere einem Leitfähigkeitssensor, NIR-Sensor, d.h. ein Nah Infrarot-Sensor, welcher die Feuchte von Erntegut direkt während dem Erntevorgang bestimmen kann oder dergleichen, ermittelt und als entsprechender vorteilhafter Betriebsparameter und somit als Istwert für den erfindungsgemäßen Soll-Ist-Vergleich herangezogen werden.

In einer besonderen Weiterbildung der Erfindung ist der Sensor als Geschwindigkeitssensor zum Erfassen einer Geschwindigkeit des Erntegutes als Istwert ausgebildet. Beispielsweise kann die Geschwindigkeit des Erntegutes vor dem Schneidwerk und/oder nach dem Schneidwerk mit Hilfe des Geschwindigkeitssensors erfasst und als Istwert für die erfindungsgemäße Soll-Ist-Vergleichseinheit zur Verfügung gestellt werden. Beispielsweise kann eine abnehmende Geschwindigkeit des Erntegutes nach dem Schneidwerk bzw. am Ende des Schneidwerks dazu führen, dass der Abstand zu verkleinern ist. Es hat sich nämlich in ersten Versuchen gezeigt, dass eine abnehmende Geschwindigkeit des Erntegutes am Ende des Schneidwerks bzw. nach dem Schneidwerk als Stauung bzw. Beeinträchtigung des Betriebs des Schneidwerks zu werten ist, der sich beispielsweise aufgrund einer sich vergrößernden Erntegutmenge pro Zeiteinheit zurückführen lässt.

Bei einer entsprechenden Geschwindigkeitsreduzierung und/oder Steigerung der Erntegutmenge pro Zeiteinheit kann durch eine Vergrößerung des Abstandes bzw. eine entsprechende Veränderung/Absenkung der Position des Trommelgehäuseelementes der Materialfluss durch das Schneidwerk optimiert werden. So kann durch Verringerung entsprechender Reibverluste bzw. Stauungen eine Verbesserung der Energieeffizienz des Schneidwerks erreicht werden.

Vorzugsweise ist ein Füllgrad- und/oder Massendurchsatz-Sensor zum Erfassen eines Füllgrades und/oder Massendurchsatzes des Schneidwerks als Istwert ausgebildet. Das bedeutet, dass eine Veränderung des Massendurchsatzes bzw. Füllgrads des Schneidwerkes als relevante Größe bzw. Istwert herangezogen wird und zur vorteilhaften Veränderung bzw. Anpassung des Abstandes bzw. der Position des Trommelgehäuseelementes gemäß der Erfindung verwendet wird. Grundsätzlich hat sich gezeigt, dass durch die vorteilhafte Anpassung des Abstandes bzw. der Position des Gehäuseelementes die Abgabe des Erntegutes bzw. des Erntegutstromes an den bzw. in den Auswurfkanal hinter dem Schneidwerk in vorteilhafter Weise reguliert bzw. aktiv geregelt werden kann. Durch eine Vergrößerung des Abstands bzw. durch ein Absenken des Trommelgehäuseelementes kann die Abgabe bzw. die Länge des Mitnahmeweges des Erntegutes innerhalb des Schneidwerks verändert bzw. reduziert werden, sodass das Erntegut früher aus der Messertrommel herausgleiten kann. Hierdurch wird wirkungsvoll ein unnötiges bzw. nachteiliges Mitnehmen des Erntegutes um den gesamten Umfang der Messertrommel herum wirkungsvoll vermeidbar. Durch eine derartige wirkungsvolle Vermeidung eines zusätzlichen Umlaufs des Erntegutes durch die Mitnahme von Schneidmessern wird ein unnötiger Energieverbrauch, der damit in Verbindung steht, vollständig vermieden. Dementsprechend wird sehr energieeffizient mit Hilfe der vorliegenden Erfindung das Schneidwerk betreibbar.

Durch die Einstellung des Abstands bzw. der Position des Trommelgehäuseelementes gemäß der Erfindung kann die Mitnahmestrecke des Ernteguts, das heißt, die Strecke bzw. der Weg den die Schneiden aufgrund ihrer Rotation mit dem Erntegut gemeinsam zurücklegen, in vorteilhafter Weise eingestellt werden. Hierdurch kann sowohl eine Optimierung des Energieeinsatzes als auch eine Optimierung der Behandlung des Erntegutes verwirklicht werden. Ein entsprechend optimierter Mitnahmeweg des Ernteguts durch die rotierenden Schneidmesser verhindert ein "Musen" bzw. ein mehrfaches, zum Teil unnötiges Zerkleinern des Erntegutes, sodass nicht nur Energie eingespart, sondern auch die Qualität des gehäckselten Ernteguts gemäß der Erfindung optimiert werden kann.

Vorzugsweise ist ein Leistungssensor zum Erfassen einer Leistung des Schneid werks als Istwert vorgesehen. Hiermit wird erreicht, dass durch die Leistungsmessung bzw. durch die Erfassung der Arbeit bzw. der Energieaufnahme, ein Rückschluss auf die Schneidarbeit bzw. das Schneiden gewonnen werden kann. Dementsprechend wird bei einer Vergrößerung der aufzuwendenden Leistung für das Schneidwerk eine Verschlechterung des Schneidens des Ernteguts erfassbar. Folglich kann die aufzuwendende Leistung bzw. die aufzuwendende Schneidarbeit dafür verwendet werden, dass diese als Istwert gemäß der Erfindung für die Regelung des Schneidwerks herangezogen werden kann. Dieser Istwert kann dafür verwendet werden, dass diesem ein Sollwert des optimalen Abstands bzw. der optimalen Stellung/Positionierung des Trommelgehäuseelementes zugeordnet wird bzw. mit dem entsprechenden Sollwert der Schneidwerkleistung gemäß der Erfindung ein elektronischer Soll-Ist-Vergleich durchgeführt werden kann und hiermit der optimale Abstand einstellbar ist.

Neben der Erfassung der Leistung des Schneidwerks ist es auch besonders vorteilhaft, die Drehzahl der Messertrommel zu erfassen. Beim Erfassen eines Absinkens der Drehzahl kann durch Verkleinern des Abstands des Trommelgehäuseelements am der Gegenschneide abgewendeten Ende, die abgesunkene Förderleistung wieder gesteigert werden.

Grundsätzlich können gemäß der Erfindung unterschiedlichste Betriebsparameter bzw. Istwerte herangezogen werden. Beispielsweise kann mit Hilfe von Sensoren und/oder Schaltern bzw. Messgliedern die Betriebsparameter erfasst bzw. ermittelt werden wie zum Beispiel, Sorte, Reifegrad, Erntegutgeschwindigkeit, Motorauslastungsgrad bzw. Auslastungsgrad des Antriebs des Schneidwerks, Materialdurchsatz, Füllgrad eines Leitbleches zwischen Trommel und Cracker, Materialumlauf, Gutfeuchte bzw. Reibbeiwert, welcher von der Gutfeuchte abhängig ist, Masse der Erntegutpartikel, Trommeldurchmesser, Verschleißzustand der Schneidmesser und/oder der Gegenschneide, gegebenenfalls Leistung bzw. Verbrauch eines Crackers im Materialfluss des Feldhäckslers, oder sonstige Betriebsparameter des Feldhäckslers. Beispielsweise kann ein Materialumlauf im Trommelgehäuse mit Hilfe eines Leitwertsensors, einer Kamera - vorzugsweise mit Bildauswerteeinheit - bzw. einer optischen (z.B. Lasersensor) und/oder elektromagnetischen Detektion/Sensorik und/oder mit Hilfe eines Prallblechs, Körperschallsensor (Klopfsensor), NIR-Sensor, Ultraschallsensor oder dergleichen bzw. ein Istwert gemäß der Erfindung erfasst werden, sodass sobald ein entsprechender Umlauf auftreten sollte, unmittelbar gemäß der Erfindung eine Regelung bzw. Veränderung des Abstandes bzw. der Position des Trommelgehäuseelementes erfolgt.

So ist beispielsweise eine Geschwindigkeit des Erntegutstromes oder der Feuchtigkeit des Erntegutstromes und/oder das Vorhandensein bzw. Nichtvorhandensein von umlaufendem Erntegut in der bzw. mit der Messertrommel als Istwert gemäß der Erfindung zu verwenden. Bei entsprechendem Unterschreiten der Erntegutgeschwindigkeit unter einem vorgegebenen Grenzwert/Sollwert kann dann eine Veränderung des Abstandes in einem vorgegebenen Maß erfolgen.

Vorteilhaft ist es, den Abstand des Trommelgehäuseelements am der Gegenschneide abgewendeten Ende in Abhängigkeit der Öffnungsweite von Einzugswalzen, zwischen denen das Erntegut dem Schneidwerk zugeführt wird, einzustellen. Besonders vorteilhaft ist es, bei zunehmender Öffnungsweite der Einzugswalzen den Abstand des Trommelelements zu vergrößern, um den zunehmenden Erntegutstrom optimal durch das Schneidwerk zu fördern.

Weitere Merkmale und Vorteile ergeben sich aus den Unteransprüchen in Verbindung mit der Beschreibung.

Weiterhin ist es auch vorteilhaft, die Abstützkraft an der erfindungsgemäßen Verstelleinrichtung aufzunehmen, welche einen Rückschluss auf die geförderte Erntegutmenge ermöglicht. Bei einem Ansteigen der Kraft, d.h. bei einer Zunahme der Belastung des Schneidwerks durch größere Mengen Erntegut, wird der Abstand des Trommelbodenelementes vorzugsweise vergrößert. Bei einer Abnahme der Kraft wird der Abstand des Trommelgehäuseelements am der Gegenschneide abgewendeten Ende vorzugsweise verkleinert. Besonders vorteilhaft ist es als Verstelleineinrichtung einen Hydraulikzylinder zu verwenden, bei welchem die Abstützkraft auf einfache Weise über den anliegenden Hydraulikdruck ermittelt werden kann.

Ein Ausführungsbeispiel der Erfindung ist in der schematischen Zeichnung dargestellt und wird anhand der einzigen Figur nachfolgend näher erläutert.

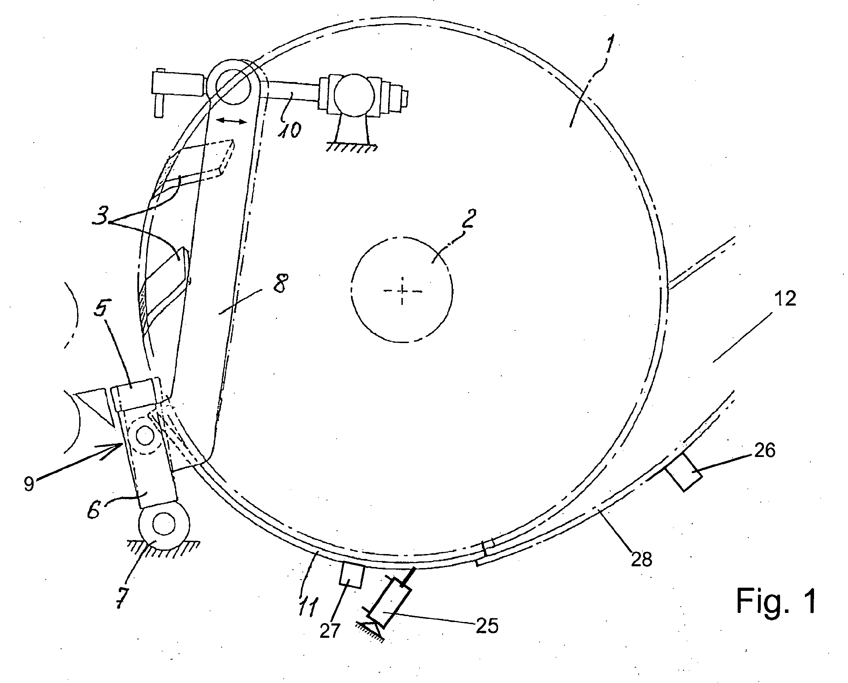

In Figur 1 ist eine Häckslertrommel 1 schematisch dargestellt, die um eine Drehachse 2 rotierbar ausgebildet ist. Die Häckslertrommel 1 umfasst umfangsseitig verteilte Schneidmesser 3 bzw. Häckselmesser 3. Lediglich aus Gründen der Übersichtlichkeit wurde auf eine Darstellung aller über den gesamten Umfang bzw. über die gesamten 360° verteilte Schneidmesser 3 verzichtet.

Der Häckseltrommel 1 bzw. den Schneidmessern 3 sind eine Gegenschneide 5 zugeordnet, sodass ein in Figur 1 linksseitig, nicht mehr dargestelltes, ankommendes und beispielsweise mittels Vorpresswalzen vorbereitetes sowie zusammengepresstes Erntegut mit Hilfe der rotierenden Schneidmesser 3 und der Gegenschneide 5 abgeschnitten bzw. abgeschert wird. Aufgrund der entgegen dem Uhrzeigersinn gerichteten Drehung D der Häckseltrommel 1 wird das abgeschnittene Erntegut beschleunigt/angetrieben und zu einem Auswurfschacht 12 weiter transportiert. Es kann hinter dem Schneidwerk 1 bzw. der Häckseltrommel 1 eine Beschleunigungseinheit für das gehäckselte Erntegut vorgesehen werden, um dieses mit hoher Geschwindigkeit aus dem Feldhäcksler auf ein nicht näher dargestelltes Transportfahrzeug zu werfen.

Zwischen dem Auswurfschacht 12 und der Gegenschneide 5 ist ein Trommelgehäuseelement 11 bzw. ein Bodenblech 11 vorgesehen. Das Bodenblech 11 ist Teil eines Trommelgehäuses und ist an der Gegenschneide 5 bzw. dessen Halterung 6 drehbar über eine Lagerung bzw. ein Lager 9 gehaltert. Die Halterung 6 der Gegenschneide 5 ist an einem Auflager 7 drehbar abgestützt, insbesondere an einem nicht näher dargestellten Tragrahmen oder dergleichen.

Durch das Abschneiden des Erntegutes unterliegen die Messer 3 und die Gegenschneide 5 einer Abnutzung und müssen von Zeit zu Zeit nachgeschliffen bzw. wieder geschärft werden. Hierdurch verringert sich einerseits der wirksame Trommeldurchmesser der Häckseltrommel 1 bzw. der Schneidmesser 3 und andererseits verkürzt sich die Gegenschneide 5. So würden ohne Nachjustage des Gegenmessers 5 sich die Schneiden 3 und das Gegenmesser 5 nicht mehr unmittelbar aneinander vorbei bewegen bzw. es würde ein Spalt zwischen dem Gegenmesser 5 und den Schneiden 3 entstehen.

Zum Ausgleich dieses Spaltes bzw. Beseitigung von diesem ist ein Stellglied 10 vorgesehen, das beispielsweise ein Linearmotor oder ein Hydraulikzylinder oder dergleichen sein kann. Das Stellglied 10 ist über einen Hebel 8 mit dem Gegenmesser 5 bzw. dessen Halterung 6 verbunden. So führt eine Veränderung der Lage des Hebels 8 mit Hilfe des Stellgliedes 10 zu einer Veränderung bzw. zu einem Justieren der Gegenschneide 5, sodass bei einem Nachschleifen der Messer 3 bzw. 5 deren Positionierung zueinander wieder exakt justiert werden kann.

Ohne nähere Darstellung in der Figur kann am Hebel 8 ein vorteilhafter Hydraulikzylinder, insbesondere ein einfach wirkender Hydraulikzylinder derart angeordnet werden, dass die Justage des Hebels 8 zu einer Veränderung der Kolbenstellung bzw. Zylinderstellung dieses Hydraulikzylinders führt. Somit wird durch die Justagebewegung des Hebels 8 mit Hilfe dieses Zylinders und einer vorteilhaften Hydraulikschlauchleitung 17 eine Kopplung mit einem zweiten Hydraulikzylinder realisiert.

Der zweite Hydraulikzylinder ist vorzugsweise ein Plungerzylinder, der an einem der Gegenschneide 5 gegenüberliegenden Ende des Bodenbleches 11 angeordnet ist und dieses durch Veränderung der Kolben- bzw. Zylinderstellung verstellen kann. Bei diesem Plungerzylinder handelt es sich um einen Hydraulikzylinder, bei dem die Kolbenstange als Kolben dient.

Optional kann zur exakten Einstellung bei Inbetriebnahme des Feldhäckslers bzw. der Häckslertrommel 1 u.a. der zweite Hydraulikzylinder eine Feineinstellung aufweisen. Hierdurch kann die exakte Ausgangsstellung bzw. die optimale Stellung des Bodenbleches 11 bei Inbetriebnahme bzw. in einer Grundeinstellung vorgenommen werden.

Gemäß der Erfindung kann in einer besonderen Ausführungsform beispielsweise die Abnützung einer Häckseltrommel 1 bzw. der Gegenschneide 5 bei einem selbstfahrenden Feldhäcksler in vorteilhafter Weise mit Hilfe des Hydraulikzylindes 25 ausgeglichen werden. Der Abstand der Häckslermesser 3 zum Trommelboden 11 nimmt durch das Nachschleifen bzw. die Abnutzung zu, wobei der Abstand bzw. der Spalt zwischen Schneiden 3 und Trommelboden 11 gemäß der Erfindung hydraulisch nachgestellt bzw. konstant gehalten werden kann.

Ohne nähere Darstellung ist in vorteilhafter Weise auf beiden Seiten der Drehachse 2 der Häckslertrommel 1 jeweils ein Hydraulikzylinder 25 vorhanden. Die hydraulischen Komponenten fügen sich auch bei einem beengten Platzangebot bei Schneidwerken von Feldhäckslern in vorteilhafter Weise ein. Möglicherweise kann eine vorteilhafte, nicht näher dargestellte Dämpfung/Federung bzw. Auslenkbarkeit des Trommelbodens 11 realisiert werden, beispielsweise mit Hilfe eines Membranspeichers oder dergleichen.

In vorteilhafter Weise ist der Hydraulikzylinder 25 als doppeltwirkender Hydraulikzylinder 25 ausgebildet, der als Aktuator der erfindungsgemäßen aktiven Regelung den Abstand zwischen Trommelboden 11 und Häckseltrommel 1 bzw. Häckselmesser 3 einstellt. Gemäß der Erfindung ist eine aktive, selbständige Anpassung des Trommelbodens 11 an den jeweiligen Betriebszustand des Feldhäckslers zur Optimierung der Materialförderung der Häckseltrommel 1 z.B. mittels Sensoren 26 wie zum Beispiel einem Geschwindigkeitssensor 26 im Bereich des Auswurfschachtes 12 von Vorteil.

Ohne nähere Darstellung kann beispielsweise auch die Antriebsleistung bzw. der Verbrauch an der Drehachse 2 bzw. der Häckseltrommel 1 erfasst und gemäß der Erfindung für den vorteilhaften elektronischen Soll-Ist-Vergleich verwendet werden. Auch kann eine vorgegebene Ausgangs-/Ruheposition des Bodenbleches 11 mit Hilfe des vorteilhaften Hydraulikzylinders 25 fest eingestellt werden. Dies kann beispielsweise abhängig von der Sorte des Erntegutes, das heißt beispielsweise bei Mais wird ein anderer Abstand eingestellt als beim Ernten/Häckseln von Gras oder Heu. Es ist auch denkbar, dass der Hydraulikzylinder 25 als Stellglied der erfindungsgemäßen aktiven Regelung in Abhängigkeit der Position der Schneidkanten der Schneidmesser 3 und/oder der Gegenschneide 5, das heißt in Abhängigkeit des Verschleißes bzw. bei einem Nachschleifen der Messer 3, 5, die Grundposition bzw. die Ausgangsposition des Bodenblechs 11 fest einstellt. Es ist denkbar, dass hierdurch eine separate Einstellvorrichtung zum Nachführen des Bodenblechs 11 im Fall von nachgeschliffenen Messern 3, 5 bzw. von Abnutzung der Messer 3, 5 entbehrlich werden kann.

Beispielsweise kann jedoch wie oben bereits kurz erwähnt ein einfach wirkender Zylinder bzw. ein Plungerzylinder vorgesehen werden, der in Serie zum Hydraulikzylinder 25 angeordnet ist. Der Zylinder stellt bei dieser Variante die Grundposition bzw. die Basisposition im Ruhezustand der Häckslertrommel 1 ein. In vorteilhafter Weise ist der Zylinder 18 mit der Position der Gegenschneide bzw. der Halters 6 der Gegenschneide gekoppelt, vorzugsweise hydraulisch über die Leitung 17 gekoppelt, sodass ein selbsttätiges Nachführen beim Schleifen der Messer 3, 5 zur Wahrung der vorgegebenen Grundposition realisiert wird.

Die Einstellung des Trommelbodenabstandes wirkt sich in nicht unerheblichem Maß auf den Energiebedarf des Häckselprozesses aus, wie zum Beispiel auch auf das Verschleißverhalten verschiedener Baugruppen. Auch der Abwurfvorgang der Häckseltrommel 1 wird dadurch wesentlich beeinflusst.

Beispielsweise ist es von Vorteil, abhängig von der Menge und/oder Beschaffenheit des gehäckselten Erntegutes, den Trommelboden 11 zu öffnen oder mit möglichst eng anliegendem Trommelboden 11 zu häckseln und hiermit eine möglichst optimale Abgabe des Ernteguts in den Auswurfschacht 12 zu realisieren. Insbesondere bei großen Durchsätzen kann die Häckseltrommel 1 das Material gemäß der Erfindung vollständig in den Auswurfschacht 12 abgeben, sodass kein nachteiliger Umlauf des Ernteguts im Trommelgehäuse bzw. im Schneidwerk vorkommen kann. Hierdurch wird die Effizienz des Schneidwerks als auch die Qualität des gehäckselten Ernteguts optimiert.

Vorteilhafte Betriebsparameter bzw. zu erfassende Istwerte sind unter anderem Parameter des Ernteguts wie Sorte, Feuchte, Reifegrad, Reibwert etc. als auch Materialdurchsatz bzw. Erntegutmenge pro Zeiteinheit, Auslastung des Antriebs der Häckseltrommel 1 bzw. Energieeinsatz, Geschwindigkeit des Erntegutstromes vor und/oder nach der Häckseltrommel 1, Verschleißzustand der Messer 3, 5 usw.

Darüber hinaus ist denkbar, am Trommelboden 11 einen vorteilhaften Sensor 27, insbesondere einen Näherungssensor 27 oder dergleichen anzuordnen, der den Abstand bzw. Istwert zwischen Bodenblech 11 und Häckseltrommel 1 bzw. Schneidmesser 3 in vorteilhafter Weise erfasst. Hierdurch kann in Kombination mit dem Stellglied 25 bzw. Hydraulikzylinder 25 exakt der vorgesehene Sollwert des Abstandes eingestellt werden. Alternativ ist auch denkbar, dass optional ein Wegsensor am Stellglied 25 bzw. am Hydraulikzylinder 25, insbesondere am Kolben bzw. der Kolbenstange, die Position bzw. die Positionsänderung in Bezug zum Zylinder bzw. dem Tragrahmen erfasst und somit die Ist-Position des Bodenblechs 11 entsprechend detektieren kann.

In vorteilhafter Weise ist der Kolben bzw. der Zylinder zur Einstellung der Ausgangsposition des Bodenblechs 11 unmittelbar mit dem Kolben bzw. Zylinder 25 bzw. Stellglied 25 verbunden. Beispielsweise sind beide Zylinder seriell in Reihe geschaltet und/oder als gemeinsame Baueinheit ausgeführt. Auch kann eine vorteilhafte Feineinstellung zur Feineinstellung der Ausgangsposition, vorzugsweise in Serie geschaltet, optional vorgesehen werden.

Mit Hilfe der Erfindung wird der Energiebedarf des Häckslers verbessert. Durch die automatisierte bzw. selbsttätige Nachstellung bzw. Einstellung des Trommelbodens 11 mit Hilfe der hydraulischen Verstellung ist der Abstand zur Trommel 1 des Trommelbodens 11 über die gesamte Lebensdauer und vor allem auch während dem Betrieb der Häckseltrommel 1 bzw. der Erntephase des Feldhäckslers nahezu immer optimal eingestellt.

Vorteilhafterweise kann ein Leitblech 28 entsprechend dem Öffnungswinkel des Bodenblechs 11 mit verstellt werden. Beispielsweise kann dies mittels Anpressung an das Bodenblech 11 und automatischem Mitverstellung durch die Boden-Ansteuerung oder durch gezielte Ansteuerung und separatem weiteren bzw. dritten Aktor realisiert werden. Hierbei kann in vorteilhafter Weise immer eine annähernd ideale Spiralform mit gleichmäßiger Umlenkung erreicht werden, insbesondere von Gegenschneide bis zu einem sog. "CornCracker".

### Bezugszeichenliste

- 1: Trommel
- 2: Drehachse
- 3: Häckselmesser
- 5: Gegenschneide
- 6: Halterung
- 7: Auflager
- 9: Lager
- 10: Stellglied
- 11: Trommelboden
- 12: Auswurfschacht
- 17: Hydraulikleitung
- 25: Hydraulikzylinder
- 26: Sensor
- 27: Sensor
- 28: Leitblech

## Patentansprüche

1. Feldhäcksler mit wenigstens einem eine um eine Rotationsachse (2) rotierende Messertrommel (1) aufweisenden Schneidwerk zum Schneiden und Zerkleinern von Erntegut, wobei die Messertrommel (1) wenigstens ein Trommelgehäuse (11) und mehrere am Umfang angeordnete Schneidmesser (3) aufweist, wobei wenigstens eine der Messertrommel (1) zugeordnete und im Wesentlichen parallel zur Rotationsachse (2) angeordnete Gegenschneide (5) vorgesehen ist, wobei zwischen Gegenschneide (5) und einem Auswurfkanal (12) zum Auswerfen des geschnittenen Erntegutes wenigstens ein Trommelgehäuseelement (11) des Trommelgehäuses vorgesehen ist, wobei eine Verstellvorrichtung (25) zum wenigstens teilweise radial zur Rotationsachse (2) ausgerichteten Verstellen des Trommelgehäuseelements (11) entlang eines Verstellweges vorgesehen ist, so dass ein Abstand zwischen dem der Gegenschneide (5) abgewendeten Ende des Trommelgehäuseelements (11) und Messertrommel (1) veränderbar ist und der Abstand auf vorgebbare Werte einstellbar ist, **dadurch gekennzeichnet, dass** die Verstellvorrichtung (25) wenigstens eine elektronische Soll-Ist-Vergleichseinheit zum Durchführen eines Vergleichs von wenigstens einem elektronischen Istwert mit einem elektronischen Sollwert aufweist und der Abstand bzw. die Position des Trommelgehäuseelementes (11) durch die Verstellvorrichtung (25) während dem Betrieb/der Erntephase regelbar ist.

2. Feldhäcksler nach einem der vorgenannten Ansprüche, **dadurch gekennzeichnet, dass** die Verstellvorrichtung (25) wenigstens eine elektronische Abstands-Aktor-Einheit (25) zum Umsetzen und Einstellen des Sollwertes des Abstandes und/oder einer Position des Trommelgehäuseelementes (11) aufweist.

3. Feldhäcksler nach einem der vorgenannten Ansprüche, **dadurch gekennzeichnet, dass** die Abstands-Aktor-Einheit (25) wenigstens eine als doppeltwirkender Hydraulikzylinder (25) ausgebildete Hydraulik-Zylinder-Kolben-Einheit (25) aufweist.

4. Feldhäcksler nach einem der vorgenannten Ansprüche, **dadurch gekennzeichnet, dass** wenigstens eine elektronische Sollwert-Speichereinheit zum Speichern von von Istwerten abhängigen Sollwerten vorgesehnen ist.

5. Feldhäcksler nach einem der vorgenannten Ansprüche, **dadurch gekennzeichnet, dass** wenigstens eine Stelleinheit zum Einstellen des Istwertes eines Betriebsparameters vorgesehen ist.

6. Feldhäcksler nach einem der vorgenannten Ansprüche, **dadurch gekennzeichnet, dass** die Stelleinheit als Sorten-Einstelleinheit zum Einstellen der Sorte des Erntegutes als Istwert ausgebildet ist.

7. Feldhäcksler nach einem der vorgenannten Ansprüche, **dadurch gekennzeichnet, dass** ein Sensor (26, 27) zur Erfassung des Istwertes als Geschwindigkeitssensor (26) zum Erfassen einer Geschwindigkeit des Erntegutes ausgebildet ist.

8. Feldhäcksler nach einem der vorgenannten Ansprüche, **dadurch gekennzeichnet, dass** ein Sensor (26, 27) zur Erfassung des Istwertes als Füllgradund/oder Massendurchsatz-Sensor zum Erfassen eines Füllgrades und/oder Massendurchsatzes des Schneidwerks ausgebildet ist.

9. Feldhäcksler nach einem der vorgenannten Ansprüche, **dadurch gekennzeichnet, dass** ein Sensor (26, 27) zur Erfassung des Istwertes als LeistungsSensor zum Erfassen einer Leistung des Schneidwerks ausgebildet ist und/oder ein Sensor zum Erfassen des Istwerts als Drehzahl-Sensor ausgebildet ist, welcher die Drehzahl der Messertrommel erfasst.

10. Feldhäcksler nach einem der vorgenannten Ansprüche, **dadurch gekennzeichnet, dass** der Abstand des Trommelgehäuseelements am der Gegenschneide abgewendeten Ende in Abhängigkeit der Öffnungsweite von Einzugswalzen einstellbar ist, wobei der Abstand des Trommelelements mit zunehmender Öffnungsweite der Einzugswalzen vergrößert wird.

## Claims

1. A forage harvester comprising at least one cutting mechanism having a blade drum (1) rotating about an axis of rotation (2) for cutting and comminuting crop material, wherein the blade drum (1) has at least one drum housing (11) and a plurality of cutting blades (3) arranged at the periphery, wherein there is provided at least one cooperating cutter (5) which is associated with the blade drum (1) and which is arranged substantially parallel to the axis of rotation (2), wherein provided between the cooperating cutter (5) and an ejection passage (12) for ejection of the cut crop material is at least one drum housing element (11) of the drum housing, wherein there is provided a displacement device (25) for displacement that is oriented at least partially radially relative to the axis of rotation (2) of the drum housing element (11) along a displacement path so that a spacing between the end of the drum housing element (11), that is remote from the cooperating cutter (5), and the blade drum (1) is variable and the spacing can be set to predeterminable values, **characterised in that** the displacement device (25) has at least one electronic target-actual comparison unit for carrying out a comparison of at least one electronic actual value with an electronic target value and the spacing or position of the drum housing element (11) can be regulated by the displacement device (25) during operation/during the harvesting phase.

2. A forage harvester according to claim 1 **characterised in that** the displacement device (25) has at least one electronic spacing actuator unit (25) for converting and setting the target value of the spacing and/or a position of the drum housing element (11).

3. A forage harvester according to one of the preceding claims **characterised in that** the spacing actuator unit (25) has at least one hydraulic cylinder piston unit (25) in the form of a double-acting hydraulic cylinder (25).

4. A forage harvester according to one of the preceding claims **characterised in that** there is provided at least one electronic target value storage unit for storage of target values dependent on actual values.

5. A forage harvester according to one of the preceding claims **characterised in that** there is provided at least one setting unit for setting the actual value of an operating parameter.

6. A forage harvester according to one of the preceding claims **characterised in that** the setting unit is in the form of a sort setting unit for setting the sort of crop material as the actual value.

7. A forage harvester according to one of the preceding claims **characterised in that** a sensor (26, 27) for detecting the actual value is in the form of a speed sensor (26) for detecting a speed of the crop material.

8. A forage harvester according to one of the preceding claims **characterised in that** a sensor (26, 27) for detecting the actual value is in the form of a filling degree and/or mass throughput sensor for detecting a degree of filling and/or mass throughput of the cutting mechanism.

9. A forage harvester according to one of the preceding claims **characterised in that** a sensor (26, 27) for detecting the actual value is in the form of a power sensor for detecting a power of the cutting mechanism and/or a sensor for detecting the actual value is in the form of a rotary speed sensor which detects the rotary speed of the blade drum.

10. A forage harvester according to one of the preceding claims **characterised in that** the spacing of the drum housing element at the end remote from the cooperating cutter is adjustable in dependence on the opening width of intake rollers, wherein the spacing of the drum element is increased with an increasing opening width of the intake rollers.

## Revendications

1. Ensileuse comprenant au moins un outil de coupe qui comporte un rotor à couteaux (1) tournant autour d'un axe de rotation (2) et qui est destiné à couper et broyer du produit récolté, le rotor à couteaux (1) comportant au moins un carter de rotor (11) et plusieurs couteaux (3) disposés en périphérie, au moins un contre-couteau (5) associé au rotor à couteaux (1) et disposé sensiblement parallèlement à l'axe de rotation (2) étant prévu, entre le contre-couteau (5) et un canal d'éjection (12) étant prévu au moins un élément de carter de rotor (11) pour éjecter le produit récolté coupé, un dispositif de réglage (25) étant prévu pour régler l'élément de carter de rotor (11) au moins partiellement radialement à l'axe de rotation (2) suivant une course de réglage, de façon à pouvoir modifier un écartement entre l'extrémité de l'élément de carter de rotor (11) opposée au contre-couteau (5) et le rotor à couteaux (1) et à pouvoir régler l'écartement selon des valeurs prescriptibles, **caractérisée en ce que** le dispositif de réglage (25) comprend au moins une unité électronique de comparaison valeur de consigne/valeur effective pour réaliser une comparaison d'au moins une valeur électronique effective avec une valeur électronique de consigne, et **en ce que** l'écartement, respectivement la position de l'élément de carter de rotor (11) est réglable par l'intermédiaire du dispositif de réglage (25) pendant le service/la phase de récolte.

2. Ensileuse selon une des revendications précédentes, **caractérisée en ce que** le dispositif de réglage (25) comprend au moins une unité électronique à actionneur d'écartement (25) pour convertir et imposer la valeur de consigne de l'écartement et/ou d'une position de l'élément de carter de rotor (11).

3. Ensileuse selon une des revendications précédentes, **caractérisée en ce que** l'unité à actionneur d'écartement (25) comprend au moins une unité hydraulique cylindre-piston (25) conformée en vérin hydraulique à double effet (25).

4. Ensileuse selon une des revendications précédentes, **caractérisée en ce qu'**au moins une unité électronique de mémorisation de valeurs de consignes est prévue pour mémoriser des valeurs de consigne dépendant de valeurs effectives.

5. Ensileuse selon une des revendications précédentes, **caractérisée en ce qu'**au moins une unité de réglage est prévue pour régler la valeur effective d'un paramètre d'exploitation.

6. Ensileuse selon une des revendications précédentes, **caractérisée en ce que** l'unité de réglage est conformée en unité de réglage de type pour régler le type de produit récolté en tant que valeur effective.

7. Ensileuse selon une des revendications précédentes, **caractérisée en ce qu'**un capteur (26, 27) de détection de la valeur effective est conformé en capteur de vitesse (26) pour détecter une vitesse du produit récolté.

8. Ensileuse selon une des revendications précédentes, **caractérisée en ce qu'**un capteur (26, 27) de détection de la valeur effective est conformé en capteur de degré de remplissage et/ou de débit massique pour détecter un degré de remplissage et/ou un débit massique de l'outil de coupe.

9. Ensileuse selon une des revendications précédentes, **caractérisée en ce qu'**un capteur (26, 27) de détection de la valeur effective est conformé en capteur de rendement pour détecter un rendement de l'outil de coupe et/ou un capteur de détection de la valeur effective est conformé en capteur de vitesse de rotation, lequel enregistre la vitesse de rotation du rotor à couteaux.

10. Ensileuse selon une des revendications précédentes, **caractérisée en ce que** l'écartement de l'élément de carter de rotor à l'extrémité opposée au contre-couteau est réglable en fonction de la largeur d'ouverture de rouleaux d'alimentation, l'écartement de l'élément de rotor étant agrandi à mesure que la largeur d'ouverture des rouleaux d'alimentation augmente.
